(19) Europäisches Patentamt
European Patent Office
Office européen des brevets

(11) **EP 2 441 144 B1**

(12) **EUROPÄISCHE PATENTSCHRIFT**

(45) Veröffentlichungstag und Bekanntmachung des Hinweises auf die Patenterteilung:
**10.08.2016  Patentblatt 2016/32**

(21) Anmeldenummer: **10722930.4**

(22) Anmeldetag: **03.05.2010**

(51) Int Cl.:
**H02G 7/05** *(2006.01)*      **H01R 4/48** *(2006.01)*

(86) Internationale Anmeldenummer:
**PCT/EP2010/002676**

(87) Internationale Veröffentlichungsnummer:
**WO 2010/142365 (16.12.2010 Gazette 2010/50)**

(54) **HALTERUNG FÜR LEITERSEIL**

MOUNTING SUPPORT FOR CONDUCTOR CABLE

FIXATION POUR CÂBLE CONDUCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **10.06.2009  DE 102009024539**

(43) Veröffentlichungstag der Anmeldung:
**18.04.2012  Patentblatt 2012/16**

(73) Patentinhaber: **Lapp Insulators GmbH**
**95632 Wunsiedel (DE)**

(72) Erfinder: **FRENKEL, Viktor**
**125080 Moscow (RU)**

(74) Vertreter: **FDST Patentanwälte**
**Nordostpark 16**
**90411 Nürnberg (DE)**

(56) Entgegenhaltungen:
| | |
|---|---|
| DE-A1- 19 513 063 | FR-A- 1 328 045 |
| FR-A- 1 503 856 | FR-A1- 2 781 098 |
| FR-A2- 2 365 228 | US-A- 886 241 |
| US-A- 1 939 086 | US-A- 4 119 285 |
| US-A1- 2007 049 073 | |

EP 2 441 144 B1

**Beschreibung**

Die Erfindung betrifft ein Halteelement zur Befestigung eines Leiterseils, insbesondere an einem Isolator. Die Erfindung beschäftigt sich dabei mit dem Problem, dass an Freileitungsmasten geführte Leiterseile bei starker Beanspruchung reißen können, wodurch die Gefahr besteht, dass ein Freileitungsmast umstürzt.

Für die Übertragung und Verteilung elektrischer Energie werden bekanntermaßen an Freileitungsmasten geführte Leiterseile verwendet. Über diese werden Industrie und Privathaushalte mit Energie versorgt.

Üblicherweise wird ein Leiterseil über einen Isolator mittels eines Halteelements an einem Masten befestigt. Ein Halteelement kann ein Leiterseil beispielsweise über Schraub- oder Nietverbindungen am Mast halten. Über die Halteelemente werden Kräfte, die aufgrund des Gewichts des darin geführten Leiterseils wirken, auf den Masten übertragen.

In bestimmten Wettersituationen, insbesondere bei kalter Witterung, kann beispielsweise Schnee oder Eis an Leiterseilen anfrieren oder eine starke Sturmbelastung auftreten. Derartige extreme Belastungen können zu einem Abriss des Leiterseils führen. Im Falle eines Leiterseilabrisses verbleibt das eingespannte Leiterseil in dem Halteelement, so dass auf den Freileitungsmast nun einseitig starke Belastungen in Form von Zugkräften wirken. Während die Zugbelastung auf der abgerissenen Seite abnimmt, bleibt die Zugbelastung auf der anderen, intakten Seite bestehen.

Ein Mast wird vor der Installation üblicherweise auf seine Standfestigkeit geprüft. Die Kräfte, denen er standhalten muss, sind dabei durch Normen festgelegt. Derartige Normen können einseitige Belastungen allerdings nur bis zu einem gewissen Grad berücksichtigen. Wird eine einseitige Belastung, die auf einen Mast_wirkt, größer als die Kraft, für die er ausgelegt ist und die er in der Lage ist auszugleichen, besteht die Gefahr, dass der Mast umstürzt.

Beispielsweise halten etwa für 500 kV ausgelegte Freileitungsmasten einseitigen Zugbelastungen von etwa 6 kN stand. Werden diese Werte, oder allgemein die Werte, für die ein System ausgelegt ist, überschritten, kann die Standfestigkeit eines Masts nicht mehr gewährleistet werden und eine Überbelastung kann zu einem Umstürzen oder Abknicken eines Freileitungsmasten führen.

Aus der DE 6 906 708 U ist eine Trag- bzw. Hängeklemme mit einstellbarer Rücklast für elektrische Freileitungen bekannt. Die Hängeklemme dient zum Halten von Freileitungen großen Seildurchmessers. Das Freileitungsseil ist in einem Seilkanal gelagert und dort mittels eines Druckstücks und einer Federplatte durch Schrauben festgeklemmt. Die Schrauben werden in sogenannten Augen eingesetzt, die sich seitlich des Seilkanals befinden. Dies dient der Befestigung der Federplatte und somit dem Halt des Leiterseils innerhalb des Seilkanals.

Es ist daher die Aufgabe der Erfindung, ein Halteelement für ein Leiterseil anzugeben, welches auch bei einer einseitigen Überlastung ein Umstürzen oder Abknicken eines Freileitungsmasten verhindern kann.

Die Aufgabe der Erfindung wird erfindungsgemäß gelöst durch ein einstückiges Halteelement mit der Merkmalskombination gemäß Anspruch 1.

Demnach umfasst das Halteelement zur Befestigung eines Leiterseils einen sich im Wesentlichen entlang einer Längsachse erstreckenden Seilkanal, zumindest einen Klemmbereich zur Klemmung des Leiterseils im Seilkanal und einen Haltebereich zur Montage, wobei der Klemmbereich zwei Klemmschenkel aufweist, die zumindest abschnittsweise den Seilkanal bilden, und wobei zumindest im Bereich des Seilkanals zu einer elastischen Klemmung der Abstand zwischen den Klemmschenkeln kleiner ist als der Außendurchmesser des einzulegenden Leiterseils.

In einem ersten Schritt geht die Erfindung von der Tatsache aus, dass Freileitungssysteme durch Krafteinwirkungen, wie sie zum Beispiel bei unruhigem Wetter und Stürmen oder Eisregen vorkommen, stark beansprucht werden. Hierbei besteht die Gefahr, dass beispielsweise vereiste Leiterseile zwischen zwei benachbarten Freileitungsmasten reißen können. Bei einem derartigen Vorfall wirken auf einen ein Leiterseil führenden Mast infolge der nicht beschädigten Seilseite große einseitige Zugkräfte, die zu einem Einknicken oder Umstürzen des Mastes führen können.

In einem zweiten Schritt erkennt die Erfindung, dass die von der Fachwelt bislang verwendeten Halteelemente zur Befestigung von Leiterseilen an Freileitungsmasten aufgrund des festen Halts Ursache für die geschilderten Probleme sind. Denn diese Halteelemente halten auch bei einer Beschädigung eines Leiterseils, also zum Beispiel bei einem Abriss, das Leiterseil fest. Hierdurch ist der Mast einer einseitigen Belastung ausgesetzt, die er nicht ausgleichen kann, so dass der Mast umknicken oder umstürzen kann.

Die Erfindung sieht nun vor, ein Halteelement derart zu konzipieren, dass es einerseits eine feste Positionierung des Leiterseils an dem Mast gewährleistet und andererseits bei starken Beanspruchungen in der Lage ist, das Leiterseil freizugeben.

Die Erfindung erkennt hierzu, dass das zuvor Genannte durch ein Halteelement mit einem Klemmbereich gewährleistet werden kann, wobei der Klemmbereich zwei Klemmschenkel aufweist, die zumindest abschnittsweise den Seilkanal bilden, und wobei zumindest im Bereich des Seilkanals zu einer elastischen Klemmung der Abstand zwischen den Klemmschenkeln kleiner ist als der Außendurchmesser des einzulegenden Leiterseils. Mit anderen Worten wird das eingelegte Leiterseil infolge des verringerten Abstands zwischen den Klemmschenkeln elastisch deformiert und hierdurch im Halteelement gehalten.

Durch eine solche, elastische Klemmung kann überraschenderweise das eingelegte Leiterseil zum einen unter normalen Bedingungen in dem Halteelement sicher gehalten werden. Zum anderen wird im Fall einer Überbelastung das Leiterseil aus der Klemmung freigegeben.

Überraschenderweise bietet die Erfindung insofern mit einer elastischen Klemmverbindung als solcher die Möglichkeit, mittels eines entsprechend ausgebildeten Halteelements ein Umstürzen von Freileitungsmasten und die daraus resultierenden Gefahren möglichst zu verhindern.

Diese Ausgestaltung eines Halteelements eröffnet die Möglichkeit, einen entsprechend ausgerüsteten Freileitungsmast besonders kostengünstig auszulegen. Die Anforderungen an das verwendete Material, beispielsweise im Hinblick auf die Menge oder die Beschaffenheit werden geringer, wodurch die Herstellungskosten gesenkt werden können. Der Mast braucht nämlich den hinsichtlich des Leiterseils vorgeschriebenen Belastungen selbst nicht mehr standzuhalten, da das Halteelement das Leiterseil rechtzeitig freigibt.

Das Halteelement kann grundsätzlich, abgesehen vom Klemmbereich, beliebig ausgestaltet sein. Insbesondere kann das Halteelement einstückig als ein Tiefziehteil ausgestaltet sein. Das Halteelement umfasst zur Führung und zum Festhalten des Leiterseils einen Seilkanal, der sich über die gesamte Länge des Halteelementes oder auch nur über Teilbereiche erstrecken kann. Der Seilkanal wird im Wesentlichen durch die Dimensionierung des Halteelements sowie durch die Form der einzelnen Teilbereiche, die das Halteelement bilden, bestimmt. Der Seilkanal kann beispielsweise mit einem eckigen oder runden Querschnitt ausgebildet sein. Er erstreckt sich im Wesentlichen entlang einer Längsachse und kann insbesondere über seine Länge zu einer gewünschten Seilführung eine Krümmung aufweisen. Die Krümmung kann hierbei je nach Ausführungsform unterschiedlich stark ausgeprägt sein. Alternativ kann der Seilkanal auch gradlinig ausgebildet sein.

Das Halteelement umfasst zumindest einen Klemmbereich zur Klemmung des Leiterseils. Der Klemmbereich kann sich über das ganze Halteelement erstrecken oder insbesondere in einzelnen Teilbereichen ausgebildet sein und dient insbesondere zur Führung des Leiterseils, welches beispielsweise durchgehend im Seilkanal geführt ist. Der Klemmbereich kann ferner symmetrisch um die Befestigungsstelle angeordnet sein. Der Haltebereich ist zur Montage des Halteelements im Freileitungssystem ausgebildet. Über den Haltebereich ist somit das Halteelement_an den entsprechenden Bauteilen eines Masten, wie beispielsweise an einem Tragarm, unmittelbar an dem Mast selbst oder an einem entsprechend ausgebildeten Tragschenkel oder dergleichen befestigt. Hierfür kann eine geeignete kraft-, form- oder materialschlüssige Verbindung vorgesehen werden. Insbesondere ist der Haltebereich zu einer Montage des Halteelements an einem Isolator ausgebildet. Im Falle eines Halteisolators ist hierfür eine Bolzenverbindung bevorzugt. Das Leiterseil selbst wird durch das Halteelement hindurch geführt. Mit anderen Worten stellt das Halteelement insbesondere ein Durchführungselement dar. Ein solches Durchführungselement hält ein symmetrisch durchlaufendes Leiterseil an dem Mast, insbesondere an einem Isolator, fest.

Der Klemmbereich weist Schenkel auf, die das Leiterseil entlang der Längsachse umschließen und so zumindest abschnittsweise den Seilkanal bilden. Weiterhin kann der Klemmbereich, je nach Anwendung entweder abgerundet oder mit Kanten versehen sein. Durch die elastische Klemmung im Klemmbereich wird das Leiterseil unter einer Normalbelastung fest in seiner Position im Seilkanal gehalten. Bei Überbelastung reicht die Haltekraft nicht mehr aus, das Leiterseil zu halten. Es wird freigegeben.

Die elastische Klemmung wird durch einen verengten Raum zwischen den Klemmschenkeln des Halteelementes erreicht. Durch eine solche Klemmung wird die Bewegbarkeit des Leiterseils durch einen Kraftschluss mit einer gewünschten Haltekraft verhindert. Die Klemmung selbst kann an einer beliebigen Stelle, je nach Ausbildung des Klemmbereiches geschehen. Die miteinander verbunden Teile, Leiterseil und Halteelement, können bis zum Erreichen einer äußeren Zugkraft, die der Haltekraft entspricht, nicht gegeneinander verschoben werden.

Eigene Untersuchungen haben ergeben, dass durch eine elastische Klemmung im Halteelement die Haltekraft für das Leiterseil problemlos derart eingestellt werden kann, dass das Leiterseil im Normalfall fest in dem Halteelement gehalten ist und im Schadensfall aus dem Halteelement gleiten kann.

Das Gleiten des Leiterseils entlang des Seilkanals wird durch die mechanische Verklemmung im Klemmbereich, also durch die Haltekraft Q behindert. Es zeigt sich, dass die Haltekraft Q insbesondere direkt proportional zur Verringerung des Durchmessers d des Leiterseils um einen Betrag $\Delta d$ durch die Klemmung ist. Die Änderung des Durchmessers ist hierbei abhängig von der Klemmkraft P, die der Klemmbereich auf das Leiterseil ausübt. Die Klemmkraft P kann über die Materialeigenschaften des Klemmbereiches und insbesondere durch die Verformbarkeit und die Vorspannung des verwendeten Materials variiert werden.

Nach dem Coulomb'schen Reibungsgesetz ist die Halte- oder Reibkraft Q, die das Leiterseil gegen ein Verrutschen im Seilkanal festhält, direkt proportional zur Klemmkraft P:

$$Q = k * P.$$

Die Klemmkraft P ist die Kraft, die durch die Klemmung senkrecht auf das eingelegte Leiterseil wirkt. Der Proportionalitätsfaktor k ist der Reibungskoeffizient, der in Abhängigkeit des Materials variieren kann. Beispielsweise beträgt k = 0,3 für die Reibung von Aluminium auf Stahl. Bei einem typischen Leiterseil mit einer Länge von 400 m zwischen zwei benachbarten Freileitungsmasten liegt der Wert der Gewichtskraft, die das Leiterseil alleine aufgrund seines Gewichtes auf das Halteelement ausübt, bei etwa 7240 N. Unter Berücksichtigung des Reibungskoeffizienten ergibt sich somit bereits ohne weitere Hilfsmittel im Halteelement eine Haltekraft Q von etwa 2170 N.

Wenn die Zugkräfte zu groß werden, beispielsweise bei einem einseitigen Abriss des Leiterseils, verringert sich die durch das Gewicht bedingte Haftkraft Q, so dass sich die Verbindung lösen und das Seil aus dem Halteelement hinaus gleiten kann.

Weiter ist die Änderung des Durchmessers d durch die Klemmung zu beachten. Der Durchmesser d des Leiterseils im verklemmten Zustand ist um einen Betrag Δd geringer als vor der Einbringung des Leiterseils in den Seilkanal bzw. den Klemmbereich. Durch die Wahl des Grads der Klemmung, beziehungsweise durch die Änderung des Durchmessers des Leiterseils kann das Halteelement für die jeweiligen Beanspruchungen ausgelegt werden.

Dabei kann davon ausgegangen werden, dass die auf das Halteelement wirkende Kraft nahezu linear von der Änderung des Durchmessers und somit vom Grad der Klemmung des Leiterseils abhängig ist. Der Grad der Klemmung, der zur stabilen Konstruktion eines Halteelements nötig ist, lässt sich mittels des Hookschen Gesetzes bestimmen:

$$\Delta d = P * d / E * A,$$

wobei die Konstanten sowohl den Querschnitt A des Leiterseils als auch das Elastizitäts- oder Young-Modul E berücksichtigen. Das Young-Modul E beschreibt den Zusammenhang zwischen Spannung und Dehnung bei der Verformung eines festen Körpers bei linear elastischem Verhalten und entspricht im einfachsten Fall der Proportionalitätskonstante k.

Insgesamt lässt sich damit die Halte- oder Reibkraft zum Halten eines Leiterseils mit einem bestimmten Durchmesser d unter Berücksichtigung der zuvor genannten Zusammenhänge nach

$$Q = C * \Delta d$$

berechnen. Die Konstante C ist ein Proportionalitätsfaktor, der den Zusammenhang zwischen der Haltkraft Q und der Änderung Δd des Durchmessers des Leiterseils herstellt. Er setzt sich wie folgt zusammen:

$$C = E * A * k / d$$

Der Proportionalitätsfaktor C berücksichtigt neben dem ursprünglichen Durchmesser d des Leiterseils, also dem Durchmesser vor dem Einlegen in den Seilkanal, und der Querschnittsfläche A auch die Materialelastizität E und den Reibungskoeffizienten k, der sich in Abhängigkeit der Materialien ändert. Die einzelnen Werte können den jeweiligen Anforderungen entsprechend zuvor beispielsweise in Experimenten bestimmt werden. Typischerweise ist zum Erreichen einer Halte- oder Reibkraft von 6 kN eine Durchmesser-Änderung von 0,5 mm erforderlich.

Mit anderen Worten ist die Haltekraft Q abhängig von der elastischen Verformung des Leiterseils.

Insgesamt kann also einerseits durch eine elastische Klemmung des Leiterseils eine sichere Befestigung gewährleistet werden und andererseits über den Grad der Klemmung, beziehungsweise über die Änderung Δd des Durchmessers der Klemmbereich den jeweiligen Anforderungen angepasst werden.

Mit anderen Worten kann bei vorgegebener Konstellation insbesondere die Haltekraft berechnet werden, die bei einer einseitigen Überlast zu einer Leiterseilfreigabe aus dem Klemmbereich, beziehungsweise aus dem Halteelement führt.

Zusätzlich kann durch eine Klemmung des Leiterseils der Montageaufwand bei der Einbringung des Leiterseils verringert werden, da zum Einlegen des Leiterseils in den Seilkanal einfach zu handhabende Presswerkzeuge verwendet werden können.

Weiterhin umfasst das Halteelement einen Haltebereich zur Montage. Der Haltebereich kann wie erwähnt konstruktiv je nach der vorgesehenen Befestigungsart durchaus verschieden ausgebildet sein. Er kann, ebenso wie der Klemmbereich, Schenkel aufweisen, die den Seilkanal entlang der Längsachse begrenzen. Der Haltebereich kann insbesondere ebenfalls für eine Klemmverbindung des Leiterseils ausgebildet sein.

Eine zur Montage vorgesehene Befestigungsstelle kann an den Schenkeln des Haltebereichs ausgebildet sein und zum Beispiel in Form eines Loches oder Einkerbung ausgebildet sein. Sie dient insbesondere der direkten Anbindung des Halteelementes und kann den jeweiligen Belastungen entsprechend ausgebildet sein. Zur Anbindung, beispielsweise an einen Isolator, kann an der Befestigungsstelle insbesondere ein Verbindungsmittel angebracht sein, welches beispielsweise für eine Bolzen- oder Nietverbindung ausgebildet ist. Bevorzugt ist die Befestigungsstelle außerhalb der Längsachse vorgesehen. Dadurch wird die Seilführung durch das Halteelement nicht behindert.

Insgesamt bietet die Befestigung über ein Halteelement mit den vorgenannten Eigenschaften zum einen die Möglichkeit einer stabilen und sicheren Befestigung eines Leiterseils, insbesondere an einem Isolator, und zum anderen kann das Halteelement sehr effektiv ein eventuelles Umstürzen von Freileitungsmasten verhindern.

Dadurch, dass die Klemmschenkel zumindest abschnittsweise den Seilkanal bilden, wird gewährleistet, dass das in dem Seilkanal gehaltene Leiterseil von den Klemmschenkeln eingefasst und sicher in seiner Position gehalten wird. Die Ausbildung der Klemmschenkel kann sich entweder über das ganze Halteelement oder auch nur über Teilbereiche erstrecken. Bevorzugt sind die Klemmschenkel der Form des Leiterseils angepasst, so dass das Leiterseil im eingebrachten Zustand nahezu vollumfänglich von den Klemmschenkeln umschlossen beziehungsweise umfangen wird. Hierdurch kann eine gleichmäßige Klemmung des Leiterseils im Klemmbereich gewährleistet werden.

Bei einem Einbringen des Leiterseils in den Seilkanal wird der Durchmesser des Leiterseils verringert und der Abstand der Schenkel zueinander dementsprechend vergrößert, so dass das Leiterseil alleine durch die Materialverformung und die wirkenden Rückstellkräfte fest im Klemmbereich gehalten ist. Die Klemmung des Leiterseils kann weiterhin beispielsweise durch die Materialdicke, durch die elastischen Materialeigenschaften oder durch die Ausgestaltung der Schenkel eingestellt werden. Die elastische Deformation des Leiterseils wird durch die Ausgestaltung und durch den Abstand der Klemmschenkel bewirkt. Eine äußere Verpressung der Schenkel kann entfallen.

Grundsätzlich genügt es bei einer derartigen Materialklemmung, wenn an wenigstens einer Position der Abstand zwischen den Schenkeln so gering ist, dass ein Leiterseil dort durch eine Klemmung gehalten werden kann. Bei im Wesentlichen parallel zueinander ausgebildeten und sich gegenüberliegenden Klemmschenkeln kann das Leiterseil jedoch gleichmäßig und einfach eingespannt werden, da die Klemmfläche in dieser Ausführung besonders groß ist. Die Reibkraft ist hierdurch erhöht.

Um das Einbringen des Leiterseils in den Seilkanal zu erleichtern, sind die Klemmschenkel an ihren freien Schenkelenden bevorzugt kanalauswärts gebogen. Durch die gebogenen Schenkelenden kann so ein gegenüber dem Seilkanal aufgeweiteter Einwand in den Seilkanal einzubringen. Hierbei kann das Seil beispielsweise in den Seilkanal mittels eines Werkzeuges eingepresst werden und dann zwischen den Klemmschenkeln fest positioniert sein.

Das in dem Klemmbereich eingepresste Leiterseil liegt vorteilhaft in diesem Bereich auf einer Auflagefläche auf. Die Auflagefläche kann grundsätzlich in verschiedenen Formen, also beispielsweise in einer abgerundeten oder eckigen Form, ausgestaltet sein. Um das Leiterseil sicher und mit einer gewünschten Reibkraft im Seilkanal halten zu können, weist der Klemmbereich eine der Seilkontur angepasste Auflagefläche auf. Beispielsweise ist es von Vorteil, wenn bei einem Leiterseil mit einem runden Querschnitt die Auflagefläche des Klemmbereiches entsprechend abgerundet ausgebildet ist. Damit ist das Seil bei entsprechend ausgestalteten Klemmschenkeln passgenau im Klemmbereich gehalten und somit stabil in dem Halteelement gesichert.

Im Allgemeinen kann die Auflagefläche für das Leiterseil insbesondere entlang der Längsachse variabel ausgebildet sein. Es ist beispielsweise vorstellbar, dass die Auflagefläche im Wesentlichen geradlinig ausgebildet ist. In einer vorteilhaften Ausgestaltung der Erfindung ist die Auflagefläche entlang der Längsachse gekrümmt. Der Grad der Krümmung kann hierbei beispielsweise je nach Größe und Gewicht des Leiterseils gewählt sein. Die Ausgestaltung berücksichtigt insbesondere, dass Leiterseile mit einem Durchhang zwischen zwei benachbarten Masten befestigt sind. Durch die Krümmung der Auflagefläche wird diesem Umstand Rechnung getragen. Insbesondere Gewichtskräfte des Seils wirken somit gleichmäßig auf das Halteelement.

Weiterhin ist die Auflagefläche bevorzugt an der Seilauslassöffnung kanalauswärts gekrümmt. Unter Berücksichtigung des Durchhangs des Leiterseils wird hierdurch eine erhöhte mechanische Belastung des Leiterseils an der Stelle verhindert, an welcher es aus dem Halteelement austritt.

Zweckmäßigerweise ist der Haltebereich zwischen zwei Klemmbereichen angeordnet. Der Haltebereich kann hierbei unterschiedlich weit ausgedehnt sein. Eine gegebenenfalls vorgesehene Befestigungsstelle ist bevorzugt etwa mittig im Haltebereich positioniert und von den Klemmbereichen symmetrisch umgeben. Der Abstand der Seitenwände im Haltebereich zueinander kann größer sein als der Abstand zwischen den Klemmschenkeln des Klemmbereichs. Das Leiterseil wird so im Haltebereich nicht verklemmt, sondern dort nur geführt. Alternativ kann der Haltebereich natürlich ebenfalls zur Klemmung ausgebildet sein.

In einer besonders vorteilhaften Ausgestaltung der Erfindung ist der Haltebereich durch zwei gegenüberliegende Schenkel mit jeweils einer Auskragung gebildet. Die Schenkel können einen Abstand voneinander aufweisen, der sich von dem Abstand zwischen den Klemmschenkeln unterscheidet. Insbesondere kann der Haltebereich auch einen vergrößerten Abstand zwischen den Schenkeln aufweisen, so dass das Leiterseil im Haltebereich nicht verklemmt ist. Die Schenkel des Haltebereichs können direkt mit den Klemmschenkeln des Klemmbereiches verbunden sein, so dass das Halteelement insgesamt einstückig, zum Beispiel als ein Tiefziehteil oder als ein Umformteil, gefertigt sein kann. Somit ist bei der Fertigung nur ein Prozessschritt nötig und es entstehen keine zusätzlichen Kosten für die Herstellung.

Die Auskragung an den Schenkeln, also der quer zur Längsachse über die Schenkel hinausragende Teil des Haltebereiches, dient bevorzugt der Anbindung des Halteelementes über eine Befestigungsstelle, insbesondere auch an einen Isolator. Die Auskragung kann unterschiedlich geformt sein und sich beispielsweise auch in ihrer Materialdicke von den Schenkeln unterscheiden. Hierdurch kann die Auskragung den jeweiligen Belastungen entsprechend ausgebildet sein.

Bevorzugt ist in die Auskragungen jeweils eine Bohrung zur Realisierung einer Bolzenverbindung eingebracht. Die Bohrung entspricht insofern der Befestigungsstelle zur Anbindung des Halteelementes. Über die Bohrung kann das Halteelement beispielsweise mit dem Endstück der Metallarmatur eines Isolators über einen sich durch beide Bohrungen erstreckenden Bolzen verbunden sein. Der Durchmesser der Bohrung kann in Abhängigkeit der Metallarmatur verschieden groß sein und beispielsweise am Rand verstärkt sein. Derartige Verbindungen stellen gängige Methode zur Befestigung von Halteelementen an Isolatoren dar. Bolzen können insbesondere mit Splinten oder durch Verschraubung an einem Isolator befestigt werden. Bolzenverbindungen sind einfach zu handhaben und stellen eine sichere mechanische Verbindung bei Erhalt eines Drehfreiheitsgrades dar. Über die Bolzenverbindung kann das Halteelement selbstverständlich auch an einem Metallteil des Masten, wie einem Tragarm oder dergleichen, montiert sein.

Je nach Anwendungsbedarf kann das Halteelement aus geeigneten Werkstoffen bestehen. Da das Halteelement bei der Verwendung in einem Freileitungssystem hohen Ansprüchen genügen muss, ist es zweckmäßigerweise aus einem metallischen Werkstoff gefertigt. Geeignete metallische Werkstoffe und insbesondere Legierungen weisen eine hohe Härte auf und eignen sich somit gut zum Führen eines Leiterseils, auch unter Berücksichtigung der Kräfte, die auf das Halteelement wirken. Weiterhin können metallische Legierungen witterungs- und korrosionsbeständig hergestellt werden, zum Beispiel durch eine zusätzliche Verwendung von Kunststoff als Beschichtung des Seilkanals, durch die Wahl der Legierung und der Zusammensetzung oder durch eine Passivierung des Metalls vor dem Einbau.

Im Folgenden wird ein Ausführungsbeispiel der Erfindung anhand einer Zeichnung näher erläutert. Dabei zeigen:

Fig. 1    eine seitliche Darstellung eines Halteelementes mit einem in einem Seilkanal gehaltenen Leiterseil,

Fig. 2    einen Querschnitt durch das Halteelement mit dem Leiterseil und

Fig. 3    eine Draufsicht auf das Halteelement mit dem Leiterseil.

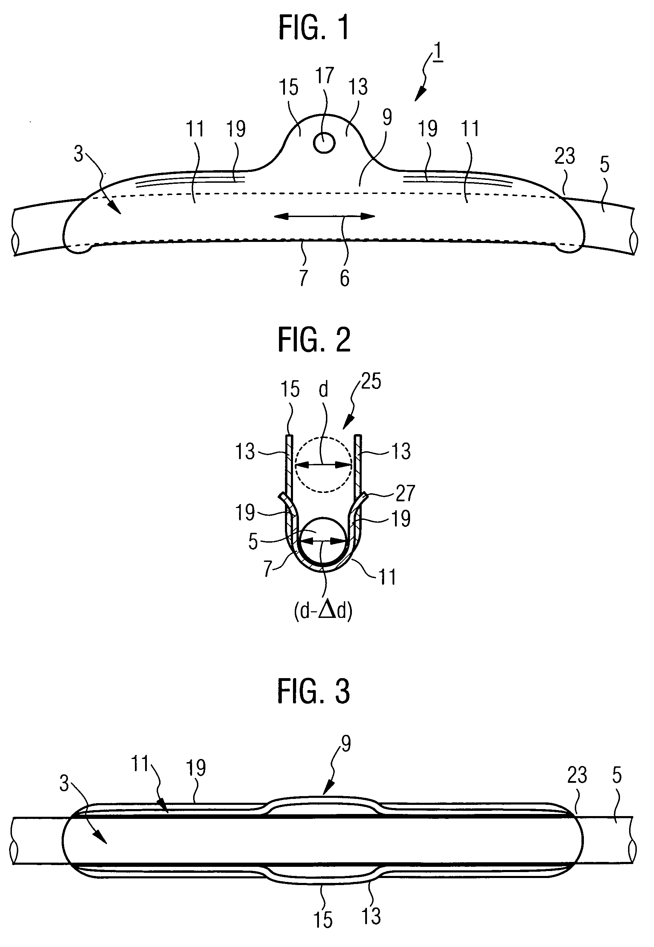

Fig. 1 zeigt eine seitliche Darstellung eines Halteelementes 1 mit einem in einem Seilkanal 3 gehaltenen Leiterseil 5. Das Halteelement 1 ist aus eloxiertem Aluminium gefertigt und weist eine hohe Korrosionsbeständigkeit auf. Es erstreckt sich im Wesentlichen entlang der Längsachse 6 und hält das Leiterseil 5 in seiner Position. Das Leiterseil 5 ist mit einem runden Querschnitt ausgebildet und liegt im Seilkanal 3 auf einer Auflagefläche 7 auf. Die Auflagefläche 7 ist im Haltebereich 9 der Seilkontur des Leiterseils 5 angepasst und insbesondere senkrecht zur Blattebene abgerundet.

Das Halteelement 1 ist mit einem Haltebereich 9 und jeweils zwei symmetrisch um diesen Haltebereich 9 angeordneten Klemmbereichen 11 einstückig als ein Tiefziehteil ausgebildet. Der Haltebereich 9 weist zwei gegenüberliegende Schenkel 13 auf, von denen aufgrund der Perspektive jeweils nur ein Schenkel 13 zu sehen ist. Innerhalb des Haltebereichs 9 ist das Leiterseil 5 zwischen den Schenkeln 13 gehalten und nicht verklemmt, da die Schenkel 13 einen Abstand voneinander größer aufweisen als der Außendurchmesser des in den Seilkanal 3 eingelegten Leiterseils 5.

Die Schenkel 13 des Haltebereichs 9 sind jeweils mit einer Auskragung 15 versehen, die in einer abgerundeten Form ausgebildet ist. Die Auskragungen 15 sind jeweils gegenüberliegend mit einer als Bohrung ausgestalteten Befestigungsstelle 17 ausgebildet, die außerhalb der Längsachse 6 liegt. Über die Befestigungsstelle 17 wird das Halteelement 1 an einem in Fig. 1 nicht gezeigten Isolator befestigt. Hierzu werden sowohl die Bohrungen als auch ein metallisches Endstück des Isolators von einem Bolzen, der nicht gezeigt ist, durchsetzt.

Die Schenkel 13 gehen direkt über in die Klemmschenkel 19 der Klemmbereiche 11, so dass das Halteelement einstückig gefertigt ist. Die Klemmbereiche 11 sind jeweils mit zwei sich gegenüberliegenden Klemmschenkel 19 ausgebildet, von denen ebenfalls nur ein Klemmschenkel 19 zu sehen ist. Die Auflagefläche 7 ist auch im Klemmbereich 11 der Seilkontur des Leiterseils 5 angepasst, insbesondere ist sie senkrecht zur Blattebene abgerundet ausgebildet. Das Leiterseil 5 ist im Halteelement 1 durchgehend im Seilkanal 3 geführt. Die Klemmschenkel 19 sind gegenüberliegend positioniert. Im durch die Klemmschenkel 19 gebildeten Seilkanal 3 wird der Durchmesser des Leiterseils 5 komprimiert. Hierdurch wird eine gewünschte Reibkraft zum Halten des Leiterseils 5 erzeugt. Der Abstand zwischen den Klemmschenkeln 19 ist kleiner als der Außendurchmesser des Leiterseils 5. Durch die unterschiedlichen Durchmesser wirkt eine Klemmkraft auf das im Klemmbereich 11 gehalten ist.

Die Klemmkraft kann über die Materialeigenschaften des Klemmbereiches 11 und insbesondere über die Form und über den Abstand der Klemmschenkel 19 variiert und dem Leiterseil 3 angepasst werden. Das Leiterseil 5 wird so durch die Klemmung unter Normallast fest in den Klemmbereichen 11 gehalten, während es bei Überlast freigegeben wird.

Die Auflagefläche 7 für das Leiterseil 5 ist entlang der kompletten Längsachse 6 mit einer leichten Krümmung ausgebildet. Die Krümmung ist dem Gewicht und dem Verlauf des Leiterseils 5 nach der Montage angepasst und kann demnach in Abhängigkeit der Ausführungsform stärker oder weniger stark ausgeprägt sein. Insgesamt wird das Leiterseil entlang der ganzen Längsachse 6 auf der Auflagefläche 7 geführt und mittels der Klemmschenkel 19 im Klemmbereich 11 fest in seiner Position gehalten.

An den jeweiligen äußeren Enden des Halteelementes 1 beziehungsweise der Klemmbereiche 11 sind Seilauslassöffnungen 23 für das Leiterseils 5 ausgebildet. An diesen Seilauslassöffnungen 23 ist das Halteelement 1 nach unten abgewinkelt ausgeführt. Durch diese Ausbildung wird unter Berücksichtigung des Durchhangs des Leiterseils 5 zwischen zwei Masten, die in Fig. 1 nicht zu sehen sind, eine erhöhte mechanische Belastung des Leiterseils 5 am Austritt aus dem Seilkanal 3 verhindert. Der Grad des Winkels der Seilauslassöffnungen 25 kann insgesamt dem Leiterseil 5, also zum Beispiel seinem Gewicht und Durchhang, angepasst werden.

Fig. 2 zeigt einen Querschnitt durch das Halteelement 1 aus eloxiertem Aluminium mit dem Leiterseil 3 gemäß Fig. 1. Das Halteelement 1 zeigt den Haltebereich 5 mit den jeweils symmetrisch um diesen Haltebereich 9 angeordneten Klemmbereichen 11.

Die Schenkel 13 des Haltebereiches 9 erstrecken über die Klemmschenkel 19 des Klemmbereichs 11 hinaus. Die sich gegenüberliegenden Teile der Schenkel 13 sind als Auskragungen 15 gemäß Fig. 1 ausgebildet. In den Auskragungen 15 sind die als Bohrungen ausgebildeten Befestigungsstellen zur Befestigung an einem Isolator eingebracht, die hier aufgrund der Querschnitt-Darstellung nicht zu sehen sind.

Das runde Leiterseil 5 hat vor dem Einpressen in das Halteelement 1 einen etwas größeren Durchmesser als im eingebrachten Zustand, so dass es fest im Seilkanal 3 gehalten werden kann. Die Auflagefläche 7 des Halteelements 1 ist der Form des Leiterseils 5 entsprechend abgerundet und bietet so einen passgenauen Halt für das Leiterseil 5. Ebenfalls sind die Klemmschenkel 19 der runden Kontur angepasst.

Die Klemmschenkel 19 verklemmen das Leiterseil 5 fest im Seilkanal 3. Die Auflagefläche 7 für das Leiterseil 5 ist entlang der kompletten Längsachse 6, die in Fig. 2 nicht gezeigt ist, mit einer leichten Krümmung gegenüber dem Leiterseil 5 ausgebildet.

Um ein leichtes Einbringen des Leiterseils 5 über einen Einführkanal 25 in den Seilkanal 3 gewährleisten zu können, sind die jeweiligen freien Schenkelenden 27 der Klemmschenkel 19 kanalauswärts gebogen. Über den Einführkanal 25 kann das Leiterseil 5 beispielsweise mit einem Presswerkzeug in das Halteelement 1 eingepresst sein.

Nach dem Einbringen über den Einführkanal 25 in den Seilkanal 3 ist der Durchmesser d des Leiterseils 5 gegenüber dem Ausgangszustand um einen Betrag Δd verringert. Das Leiterseil 5 wird somit unter elastischer Verformung im Seilkanal 3 des Halteelements 1 gehalten.

In Fig. 3 ist eine Draufsicht auf das Halteelement 1 mit dem Leiterseil 3 gemäß den Fig. 1 und 2 zu sehen. Die Ausführungen zu Fig. 3 entsprechen denen aus den beiden vorhergegangenen Figuren und können dementsprechend sinngemäß übertragen werden.

Insbesondere ist in Fig. 3 der durchgehende Seilkanal 3 im Halteelement 1 zu erkennen. Innerhalb des Seilkanals 3 wird das Leiterseil 5 entlang der Längsachse 6 durchgehend geführt. Es wird von den Klemmschenkeln 19 verklemmt und innerhalb des Haltebereiches 9 von den Halteschenkeln nur geführt. Der Abstand der sich gegenüberliegenden Klemmschenkeln 19 zueinander ist deshalb kleiner als der Abstand der sich gegenüberliegenden Schenkeln 13 des Haltebereichs 9.

Bezugszeichenliste

1      Halteelement
3      Seilkanal
5      Leiterseil
6      Längsachse
7      Auflagefläche
9      Haltebereich
11     Klemmbereich
13     Schenkel
15     Auskragung
17     Befestigungsstelle
19     Klemmschenkel
23     Seilauslassöffnung
25     Einführkanal
27     Schenkelenden

**Patentansprüche**

1. Einstückiges Halteelement (1) zu einer hängenden Befestigung eines Leiterseils (5) an einem Freileitungsmast, umfassend einen sich im Wesentlichen entlang einer Längsachse (6) erstreckenden Seilkanal (3), einen Klemmbereich (11) zur Klemmung des Leiterseils (5) im Seilkanal (3) und einen Haltebereich (9) zur Montage, wobei der Klemmbereich (11) eine der Seilkontur angepasste untere Auflagefläche (7) aufweist, **dadurch gekennzeichnet, dass** der Klemmbereich (11) zwei sich in vertikaler Richtung erstreckende Klemmschenkel (19) aufweist, die zumindest abschnittsweise den Seilkanal (3) bilden, wobei zumindest im Bereich des Seilkanals (3) zu einer elastischen Klemmung der Abstand zwischen den Klemmschenkeln (19) kleiner ist als der Außendurchmesser des einzulegenden Leiterseils (5).

2. Halteelement (1) nach Anspruch 1,
   wobei der Haltebereich eine Befestigungsstelle (17) außerhalb der Längsachse (6) umfasst.

3. Halteelement (1) nach Anspruch 1 oder 2,
   wobei die Klemmschenkel (19) an ihren freien Schenkelenden (23) kanalauswärts gebogen sind.

4. Halteelement (1) nach einem der vorhergehenden Ansprüche,
   wobei die Auflagefläche (7) entlang der Längsachse (6) gekrümmt ist.

5. Halteelement (1) nach einem der vorhergehenden Ansprüche,
   wobei die Auflagefläche (7) an der Seilauslassöffnung (23) kanalauswärts gekrümmt ist.

6. Halteelement (1) nach einem der vorhergehenden Ansprüche,
   wobei der Haltebereich (9) zwischen zwei Klemmbereichen (11) angeordnet ist.

7. Halteelement (1) nach einem der vorhergehenden Ansprüche,
   wobei der Haltebereich (9) durch zwei gegenüberliegende Schenkel (13) mit jeweils einer Auskragung (15) gebildet ist.

8. Halteelement (1) nach Anspruch 7,
   wobei in die Auskragungen (15) jeweils eine Bohrung zur Realisierung einer Bolzenverbindung eingebracht ist.

9. Halteelement (1) nach einem der vorhergehenden Ansprüche,
   das aus einem metallischen Werkstoff gefertigt ist.

## Claims

1. One-piece holding element (1) for suspended fastening of a conductor cable (5) on a transmission tower, comprising a cable channel (3) which extends substantially along a longitudinal axis (6), a clamping region (11) for clamping the conductor cable (5) in the cable channel (3), and a holding region (9) for mounting, wherein the clamping region (11) has a lower bearing surface (7) adapted to the cable contour, **characterized in that** the clamping region (11) has two clamping legs (19) which extend in a vertical direction and which at least partially form the cable channel (3), wherein, at least in the region of the cable channel (3), and to obtain elastic clamping, the distance between the clamping legs (19) is less than the outside diameter of the conductor cable (5) to be inserted.

2. Holding element (1) according to Claim 1, wherein the holding region comprises a fastening point (17) outside the longitudinal axis (6).

3. Holding element (1) according to Claim 1 or 2, wherein the clamping legs (19) are bent outwards from the channel at their free leg ends (23).

4. Holding element (1) according to one of the preceding claims, wherein the bearing surface (7) is curved along the longitudinal axis (6).

5. Holding element (1) according to one of the preceding claims, wherein the bearing surface (7) is curved outwards from the channel at the cable outlet opening (23).

6. Holding element (1) according to one of the preceding claims, wherein the holding region (9) is arranged between two clamping regions (11).

7. Holding element (1) according to one of the preceding claims, wherein the holding region (9) is formed by two opposite legs (13) with a respective projection (15).

8. Holding element (1) according to Claim 7, wherein a hole is made in each of the projections (15) to achieve a bolted connection.

9. Holding element (1) according to one of the preceding claims, which is produced from a metal material.

## Revendications

1. Élément de maintien (1) en monobloc, pour une fixation suspendue d'un câble conducteur (5) sur un pylône de lignes électriques aériennes, comprenant un canal pour câble (3) s'étendant sensiblement le long d'un axe longitudinal (6), une zone de serrage (11) pour le serrage du câble conducteur (5) dans le canal pour câble (3) et une zone de maintien (9) pour le montage, la zone de serrage (11) comportant une surface d'appui (7) inférieure adaptée au contour du câble, **caractérisé en ce que** la zone de serrage (11) comporte deux branches de serrage (19) s'étendant en direction verticale qui au moins par tronçons forment le canal pour câble (3), pour un serrage élastique, au moins dans la zone du canal pour câble (3), l'écart entre les branches de serrage (19) étant inférieur au diamètre extérieur du câble conducteur (5) qui doit être inséré.

2. Élément de maintien (1) selon la revendication 1, la zone de maintien comprenant un point de fixation (17) hors de l'axe longitudinal (6).

3. Élément de maintien (1) selon la revendication 1 ou la revendication 2, sur leurs extrémités de branche (23) libres, les branches de serrage (19) étant recourbées vers l'extérieur du canal.

4. Élément de maintien (1) selon l'une quelconque des revendications précédentes, la surface d'appui (7) étant curviligne le long de l'axe longitudinal (6).

5. Élément de maintien (1) selon l'une quelconque des revendications précédentes, sur l'orifice de sortie (23) du câble, la surface d'appui (7) étant curviligne vers l'extérieur du canal.

**6.** Élément de maintien (1) selon l'une quelconque des revendications précédentes, la zone de maintien (9) étant placée entre deux zones de serrage (11).

**7.** Élément de maintien (1) selon l'une quelconque des revendications précédentes, la zone de maintien (9) étant formée par deux branches (13) opposées avec chacune un porte-à-faux (15).

**8.** Élément de maintien (1) selon la revendication 7, dans les porte-à-faux (15) étant ménagé chaque fois un perçage pour la réalisation d'un assemblage par boulon.

**9.** Élément de maintien (1) selon l'une quelconque des revendications précédentes, qui est fabriqué en une matière métallique.

## FIG. 1

## FIG. 2

$(d-\Delta d)$

## FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 6906708 U